(19) Europäisches Patentamt / European Patent Office / Office européen des brevets

(11) **EP 3 263 239 B1**

(12) **EUROPEAN PATENT SPECIFICATION**

(45) Date of publication and mention of the grant of the patent:
**03.04.2019 Bulletin 2019/14**

(51) Int Cl.:
*C03C 3/108* (2006.01)          *C03B 19/06* (2006.01)
*C03B 19/09* (2006.01)          *C03B 19/10* (2006.01)
*B09B 3/00* (2006.01)          *B09B 5/00* (2006.01)
*C03C 1/00* (2006.01)

(21) Application number: **17173641.6**

(22) Date of filing: **31.05.2017**

(54) **METHOD FOR PRODUCING CLADDING OR FACADE GLASS TILES MADE OF WASTE CATHODE RAY TUBE GLASS (CRT) AND A CRT GLASS TILE**

VERFAHREN ZUR HERSTELLUNG VON VERKLEIDUNG ODER FASSADENGLASFLIESEN AUS ABFALLKATHODENSTRAHLRÖHRENGLAS (CRT) UND EINE CRT GLASFLIESE

PROCÉDÉ DE PRODUCTION DE CARREAUX DE VERRE DE BARDAGE OU DE FAÇADE CONSTITUÉS DE DÉCHETS DE VERRE POUR TUBE CATHODIQUE (CRT) ET CARREAU DE VERRE CRT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2016 PL 41774316**

(43) Date of publication of application:
**03.01.2018 Bulletin 2018/01**

(73) Proprietor: **Instytut Ceramiki i Materialow Budowlanych**
**02-676 Warszawa (PL)**

(72) Inventors:
• **Gebel, Roman**
  **05-804 Pruszkow (PL)**
• **Synowiec, Barbara**
  **02-676 Warszawa (PL)**
• **Chmielewska, Danuta**
  **02-676 Warszawa (PL)**
• **Witek, Adam**
  **02-496 Warszawa (PL)**
• **Losiewicz, Andrzej**
  **02-676 Warszawa (PL)**
• **Jaegermann, Zbigniew**
  **02-676 Warszawa (PL)**
• **Ducka, Agnieszka**
  **02-676 Warszawa (PL)**

(74) Representative: **AOMB Polska Sp. z.o.o.**
**Ul. Emilii Plater 53**
**21st Floor**
**00-113 Warsaw (PL)**

(56) References cited:
EP-A1- 1 484 292          WO-A2-2011/030366
DE-A1-102011 075 190      US-A1- 2016 122 232

• ANDREOLA F ET AL: "Recycling of CRT panel glass as fluxing agent in the porcelain stoneware tile production", CERAMICS INTERNATIONAL, ELSEVIER, AMSTERDAM, NL, vol. 34, no. 5, 1 July 2008 (2008-07-01), pages 1289-1295, XP022666996, ISSN: 0272-8842, DOI: 10.1016/J.CERAMINT.2007.03.013 [retrieved on 2008-05-15]
• ANDREOLA F ET AL: "Glass-ceramics obtained by the recycling of end of life cathode ray tubes glasses", WASTE MANAGEMENT, ELSEVIER, NEW YORK, NY, US, vol. 25, no. 2, 1 January 2005 (2005-01-01), pages 183-189, XP027619114, ISSN: 0956-053X [retrieved on 2005-01-01]

**Description**

Technical field

The object of the invention is a method for producing cladding or facade glass tiles from waste cathode ray tube glass (CRT) and a CRT glass tile.

State of the art

Every year, over ten thousand tonnes of cathode ray tube glass find their way to municipal landfills in Poland, and as cathode ray tube television sets and screens are being withdrawn from use, this is going to continue for the coming years (estimated 5 to 7 years). Accumulation of this type of waste is not neutral for the environment. Typically, CRT glass comprises substantial amounts of toxic components, including in particular PbO and BaO. Most of PbO (usually above 21 % by weight) is present in CRT glass originating from cathode ray tube cone, while the glass originating from the screen part of the cathode ray tube shows in turn a relatively high (usually above 7.5 % by weight) BaO content.

Seeking possibilities for CRT glass waste disposal is consistent among other things with the implementation of the European Union Directive 2002/96/EC on waste electrical and electronic equipment (WEEE), obliging the Member States to collect, process, recover and recycle the WEEE waste, because CRT glass is included in the group of electronic waste. The studies on waste materials, such as in particular CRT glass, conducted previously, not only in Europe, but also in other countries, have indicated the possibility of their utilisation in ceramic and glass industry.

For example, US 20160122232 A1 discloses a ceramic mixture comprising CRT glass used as a coating component for applying to ceramic tiles, as glaze as well as engobe (slipware) or an element of sub-glaze decoration. Ceramic tiles with an addition of CRT have been also described. The specified firing temperatures within a range of 1350-1450°C, or even close to 1050°C, in an unambiguous manner indicate the small content of CRT in the tile material composition, because in this temperature CRT glass melts completely.

US 9321695 describes a mixture for producing a glass-ceramic composite in which the use of soda-lime glass is being considered, and subsequently - cullet obtained from glass used in pharmacy, CRT glass or borosilicate glass. However, the specified composition of CRT glass noticeably differs from a typical real composition, due to lack of any reference to oxides typical for CRT glass, such as lead (usually approx. 20 wt%), barium or strontium oxides. It has also been unambiguously indicated that the resulting products - in particular tiles formed in moulds - are characterised by a considerable content of crystalline phases.

US 20150299032 discloses producing of a composite comprising waste materials, including i.a. CRT glass. The composite comprises at most 80% by weight of the glass component, at least 20% by weight of the mineral non-glass component and less than 5% by weight of synthetic binding agents. Examples of the mineral component listed include i.a. ceramics, ceramic glazes, rocks or waste from quarries, sanitary ceramic waste, brick shards.

CN 104876541 discloses a ceramic tile produced from a raw material mixture comprising 40-60 parts by weight of kaoline, 40-60 parts by weight of aluminium oxide, 20-30 parts by weight of quartz sand, 15-25 parts by weight of feldspar, 5-10 parts by weight of residue of an electrolytic process for producing manganese, 5-10 parts by weight of CRT glass and 5-10 parts by weight of fly ash.

In turn, CN 103395995 describes a process for producing glass-ceramic tiles using glass waste (including CRT glass amounting to 40-60% by weight of the mixture). The glass used comprises i.a. 1-5 wt% $B_2O_3$, 1-10 wt% ZnO and 5-25 wt% CaO. Crystallisation of the glass component used during formation of glass-ceramic tiles has also been clearly mentioned.

Furthermore, WO 2011030366 describes a mixture for producing ceramic tiles comprising CRT glass in amount of 10-50% by weight.

The paper of R. Gebel and B. Synowiec; MATERIAŁY CERAMICZNE, 64, 2, (2012), 234-238 discusses various possibilities of disposal of cathode ray tube CRT as glaze for tiles, plates and ceramicware, a flux for tile colours, glass colours and overglaze colours for pottery and porcelain as well as a sinter for cladding elements.

US 20140073830 discloses a method for processing hazardous waste glass (including CRT glass) to obtain ceramic products having respectively low concentration of hazardous substances. In the described method the glass waste, in particular CRT, is mixed with a filler, such as aluminium oxide, magnesium silicate or bentonite, in the amount between 5 and 40% by weight, and - in one of the embodiments - with plastic material such as clay, it being then possible for such plastic material to constitute 5 to 40% by weight of the mixture.

In a majority of known solutions waste CRT glass was used either as a glazing material for ceramic tiles, or as an additive for ceramic-glass composites. However, the tendency to increase the percentage of CRT glass waste in ceramic-glass products resulting from the need to increase the efficiency of recycling and decrease energy inputs by reducing the required firing temperature was quite noticeably hampered by the necessity for the resulting products, such as, e.g. ceramic-glass tiles comprising CRT glass, to show satisfying performance parameters, allowing to use them in areas reserved so far for ceramic tiles only. As a result, the known solutions reflect subsequent compromises between increasing the utilisation level of waste glass, including CRT glass, as well as reducing the energy consumption of the process for producing products such as tiles, and the requirements related to their performance parameters, such as average water absorption, bending strength, breaking strength, chemical resistance, hardness, and in case of outdoor uses also frost resistance.

Since optimising solutions of this type requires adjusting a number of factors, such as quantitative and qualitative composition of individual raw materials and the whole mixture, as well as processing parameters such as particle size distribution, method for moulding products prior to firing, or firing temperature, there is a continuous demand for new solutions allowing to provide the best possible remedy for the above-mentioned contradictions, i.e. to ensure maximum level of CRT glass waste utilization and to reduce energy consumption of the product manufacturing process, with the final products fulfilling respective performance and aesthetic parameters at the same time.

Summary of the invention

The object of the present solution was to overcome the above-mentioned problems associated with using known solutions, and in particular - to provide technology for producing a new product from CRT glass waste, having high utility value, allowing to considerably reduce the amount of this type of waste, while limiting energy consumption of the producing process allowing to manufacture products meeting the current standards related to performance parameters of products such as ceramic cladding and/or facade tiles.

The object of the invention is a method for producing cladding or facade glass tiles from waste cathode ray tube glass (CRT), in which

at first, an anti-sedimentation agent is added to the basic matter comprising at least 95 % by weight of waste cathode ray tube glass and no more than 5 % by weight of a mineral binder having illite content within the range of 22-38 % by weight, mixed to obtain a homogeneous mixture and wet-ground to obtain a particle size distribution, wherein the particle substitute diameter D(v,0.9) determined by laser grain size analysis is contained within the range of 24-32 $\mu$m, and the particle substitute diameter D(v.0.5) is contained within the range of 5.26.-8.30 $\mu$m,

subsequently, magnesium stearate in amount of 0.27-0.30 % by weight with respect to dry basic matter and a binding agent in the amount of 0-0.25 % by weight with respect to dry basic matter are added to the ground mixture, the binding agent being used in form of an aqueous solution,

the resulting suspension is spray dried to obtain granules,

the granules are placed in moulds and dry pressed to produce tiles,

and then the tiles are fired at a temperature ranging from 780 to 900°C.

Preferably, the glass used as waste cathode ray tube glass (CRT) comprises: 53-63 wt% $SiO_2$, 1-3.4 wt% $Al_2O_3$, 0.07-0.09 wt% $Fe_2O_3$, 0.050.50 wt% $TiO_2$, 6-7.8 wt% $Na_2O$, 7-8.3 wt% $K_2O$, 0.05-0.07 wt% $Li_2O$, 0.02-3.6 wt% CaO, 0.03-2.3 wt% MgO, 0.05-0.50 wt% ZnO, less than 0.001 wt% CuO, 0.2-21 wt% PbO, 1.1-8.6 wt% BaO, 0.5-9.0 wt% SrO, 0.95-1.9 wt% $ZrO_2$, less than 0.003 wt% NiO, less than 0.002 wt% CdO, less than 0.21 wt% $Sb_2O_3$ and less than 0.12 wt% $B_2O_3$.

In a further preferred embodiment of the method according to the invention, the anti-sedimentation agent is used in the amount of 0.1 to 0.5 % by weight with respect to dry basic matter. Particularly preferably, magnesium chloride or adipic acid is used as the anti-sedimentation agent.

In another preferred embodiment of the method according to the invention, poly(vinyl alcohol), methyl cellulose or poly(vinyl acetate) is used as the binding agent. Particularly preferably, a 4 % aqueous solution of the binding agent is used.

In the next preferred embodiment of the method according to the invention, at least one inorganic pigment is additionally added to the suspension. Preferably, the inorganic pigment is added in the amount of 1 to 3 % by weight with respect to dry total weight of the tile matter components.

The object of the invention is also a glass tile of waste cathode ray tube glass (CRT), characterised in that it comprises a basic matter and an anti-sedimentation agent, wherein the basic matter comprises at least 95 % by weight of waste cathode ray tube glass and no more than 5 % by weight of a mineral binder having illite content within a range of 22-38 % by weight, while amorphous phase constitutes over 98 % by weight of the tile material.

Preferably, as the waste cathode ray tube glass (CRT) the glass tile according to the invention comprises the glass comprising: 53-63 wt% $SiO_2$, 1-3.4 wt% $Al_2O_3$, 0.07-0.09 wt% $Fe_2O_3$, 0.050.50 wt% $TiO_2$, 6-7.8 wt% $Na_2O$, 7-8.3 wt% $K_2O$, 0.05-0.07 wt% $Li_2O$, 0.02-3.6 wt% CaO, 0.03-2.3 wt% MgO, 0.05-0.50 wt% ZnO, less than 0.001 wt% CuO, 0.2-21 wt% PbO, 1.1-8.6 wt% BaO, 0.5-9.0 wt% SrO, 0.95-1.9 wt% $ZrO_2$, less than 0.003 wt% NiO, less than 0.002 wt% CdO, less than 0.21 wt% $Sb_2O_3$ and less than 0.12 wt% $B_2O_3$.

In one of the preferred embodiments, the glass tile according to the invention is an unglazed tile and shows the following parameters:

average water absorption ≤ 0.5 %, determined according to PN-EN IS010545-3:1999;

average bending strength ≥ 46.00 N/mm$^2$, determined according to PN-EN ISO 10545-4:2012;

breaking strength > 2081.00 N, determined according to PN-EN ISO 10545-4:2012; and

chemical resistance - no visible changes, determined according to PN-EN ISO 1054513:1999 + Ap1:2003.

Preferably, such tile is a cladding tile.

In another preferred embodiment such tile is a facade tile and shows frost resistance, i.e. no fractured tiles per 100 cycles, determined according to PN-EN ISO 10545-12:1999.

The main advantage of the solution according to the invention is above all the ability to utilise virtually the whole CRT glass waste, producing a new product capable of being used as an interior cladding tile and a facade tile. Glass tiles according to the invention show physicochemical parameters that comply with the European standards for ceramic tiles, both glazed and unglazed.

At the same time, due to the composition of the basic matter (comprising at least 95% by weight of CRT glass), the firing temperature for tiles according to the invention is 150 to 250°C lower compared to the firing temperature of traditional, ceramic wall tiles (in the case of unglazed tiles it usually falls within a range of 1220 -1250°C, to ensure that the final tiles meet the standards related to performance parameters), which in a noticeable manner reduces the energy consumption of the whole process, and as a consequence also the costs of producing these tiles. Furthermore, by changing the firing temperature within the method according to the invention, it is possible, depending on the actual need, to produce matt or semi-matt tiles having distinct sharp edges (maximum firing temperature approximately 800°C) or tiles having glazed surfaces and rounded edges (maximum firing temperature approximately 900°C).

Short description of the figures of drawing

The invention in its preferred embodiments is shown in the drawing, in which:

fig. 1 shows matt tiles produced by the method according to the invention, having distinct sharp edges, fired in an electric furnace for a period of 196 minutes, including keeping for 13 minutes at a maximum temperature of 805±5°C;

fig. 2 shows tiles having glazed surfaces and rounded edges produced by the method according to the invention, fired in an electric furnace for a period of 196 minutes, including keeping for 13 minutes at a maximum temperature of 900°C.

Detailed description of the invention

The method for producing glass tiles according to the invention comprises the following unit processes: grinding, granulation, pressing, firing. The technological parameters of these processes, except for the firing process, depend on the technical parameters of the devices by means of which intermediate products having precisely defined parameters are manufactured.

Grinding process

A batch consisting of the basic matter and the anti-sedimentation agent is placed in a grinding device (e.g. a ball mill). The basic matter comprises at least 95% by weight of waste cathode ray tube glass and no more than 5% by weight of a mineral binder having illite content of 22-38% by weight. The set is subjected to a wet grinding process to obtain a particle size distribution, wherein the particle substitute diameter D(v,0.9) determined by laser grain size analysis is contained within the range of 24-32 $\mu$m and the particle substitute diameter D(v,0.5) is contained within the range of 5.26-8.30 $\mu$m. Laser grain size analysis is based on the fact that the laser diffraction angle is inversely proportional to the particle size. During the measurement the particle substitute diameter D(v,0.1), D(v,0.5), D(v,0.9) are determined, which means that below the D value there is respectively 10%, 50%, and 90% of the particles. Depending on the type of the laser grain size analyser a specific particle size range is measured. The measurement is performed according to the producer's manual, appropriate for a given device.

Subsequently, magnesium stearate in the amount of 0.27-0.30 % by weight with respect to dry basic matter and - optionally - a binding agent in the amount up to 0.25% by weight with respect dry to basic matter is added to the ground mixture, whereby the binding agent is used in form of an aqueous solution. The density of suspension produced in this manner is contained within the range of 1.52-1.6 $g/cm^3$.

In order to obtain coloured tiles, at least one inorganic pigment, usually in the amonut of 1-3% by weight with respect to the total dry matter of the tile matter components, is added to the suspension. Typically, inorganic pigments having the structure of spinels or zirconium silicate are used.

Granulation process

The suspension prepared as described above is conveyed to a spray dryer. The drying parameters, i.e. temperature at the inlet and outlet of the dryer, are selected depending on the dryer type, so that the average water content of the granules would be within the range of 0.4- 2.4%. Water content of the granulate is determined using a weighing method by drying a product sample to a constant mass and calculating the water content based on the mass difference. Choice of the device (disc dryer, nozzle dryer) and the specific model thereof (having specified operating parameters such as, i.a. the temperature of inlet and outlet gases) is made depending on the specific composition of the material dried and the desired features of the granulate, such as particle size, bulk density.

Pressing process

Granulate having specific water content is subjected to a dry pressing process in moulds defined by the tile size. The pressing force is determined depending on the type of moulded tiles, taking into account the parameters of the given type of press and the specific composition and particle size of the granulate to be pressed. For example, in the case of tiles 60 x 60 mm in size, the pressing force below 250 $kg/cm^2$ is used.

Firing process

The pressed tiles are fired in a gas or electric furnace. Depending on the furnace type, the firing process is run within a maximum temperature range of 780-900°C.

In a gas furnace the process is run at a temperature range of 790±10°C, for a period of 90 minutes, including keeping for 13 minutes at the maximum firing temperature. A semi-matt tile having distinct sharp contours of edges is produced.

In an electric furnace intended for firing glass products the process takes place at a temperature range of 805±5°C, including keeping for 13 minutes at the maximum firing temperature and with the firing period being 196 minutes. A semi-matt tile having distinct sharp contours of edges is produced. In turn, in the case of firing tiles within a temperature range of 900±5°C for a period of 90 minutes, including keeping them for 13 minutes at the maximum firing temperature, a tile having a glossy surface and rounded edges is produced.

Working examples:

In Examples 1-15 below, a CRT glass of composition presented in table 1 below was used as waste cathode ray tube glass.

Table 1: composition of CRT glass used in Examples 1-15

| component | content [wt%] | component | content [wt%] |
|---|---|---|---|
| $SiO_2$ | 53-63 | CuO | < 0.001 |
| $Al_2O_3$ | 1-3.4 | PbO | 0.2-21 |
| $Fe_2O_3$ | 0.07-0.09 | BaO | 1.1-8.6 |
| $TiO_2$ | 0.05-0.50 | SrO | 0.5-9.0 |
| $Na_2O$ | 6-7.8 | $ZrO_2$ | 0.95-1.9 |
| $K_2O$ | 7-8.3 | NiO | < 0.003 |

(continued)

| component | content [wt%] | component | content [wt%] |
|---|---|---|---|
| $Li_2O$ | 0.05-0.07 | CdO | < 0.002 |
| CaO | 0.02-3.6 | $Sb_2O_3$ | <0.21 |
| MgO | 0.03-2.3 | $Cr_2O_3$ | - |
| ZnO | 0.05-0.50 | $B_2O_3$ | <0.12 |

Natural radioactivity was determined for CRT glass samples originating from Norway and Poland with the composition specified in table 1.

Activity indices $f_1$ and $f_2$ constitute a basis for evaluation of natural radioactivity in the test sample. The activity index $f_1$ is a dimensionless quantity defining the natural radioactive isotope content in the test sample:

$$f_1 = \Sigma S_{ij}/a_i = S_K/3000 + S_{Ra}/300 + S_{Th}/200$$

where $S_K$, $S_{Ra}$, $S_{Th}$- isotope concentrations expressed in Bq/kg in the test sample; $a_i$ - parameters determined experimentally for individual isotopes.

The $f_2$ index defines the radium isotope content in the test sample:

$$f_2 = S_{Ra}$$

Pursuant to current regulations, the required values of the above-mentioned indices in construction raw materials and products used in buildings intended to accommodate people or livestock cannot exceed more than 20% of the values: $f_1 = 1$; $f_2 = 200$Bq/kg, meaning that the maximum values of these indices are: $f_1 = 1.2$, $f_2 = 240$ Bq/kg.

The test results are presented in table 2 below.

Table 2: Determination of natural radioactivity for samples of CRT glass used in Examples 1-15

| Parameter | Norway | Poland | Norway | Poland |
|---|---|---|---|---|
| | Screen | | Cone | |
| Potassium concentration $S_K$ | 2007.96±119.72 Bq/kg | 1871.61±124.63 Bq/kg | 2196.48±123.74 Bq/kg | 213.77±33.31 Bq/kg |
| Radium concentration $S_{Ra}$ | 68.85±8.29 Bq/kg | 85.18±11.59 Bq/kg | 14.74±4.60 Bq/kg | 0.00±5.25 Bq/kg |
| Thorium concentration $S_{Th}$ | 14.91±2.88 Bq/kg | 36.50±4.96 Bq/kg | 2.95±1.90 Bq/kg | 0.00±2.37 Bq/kg |
| $f_1$ test result | 0.96 | 1.08 | 0.78 | 0.07 |
| $f_2$ test result | 68.85 | 85.18 | 14.74 | 15.25 |
| Confidence level - 0.95 | | | | |
| Total uncertainty $Af_1$ | ±0.06 | ±0.07 | ±0.04 | ±0.02 |
| Total uncertainty $Af_2$ | ± 8.29 | ±11.59 | ± 4.60 | ±5.25 |

(continued)

| The value of activity indices for evaluation | | | |
|---|---|---|---|
| $f_1$ max. | 1. 02 | 1.15 | 0.82 | 0.09 |
| $f_2$ max. | 77.14 | 96.77 | 19.34 | 5.25 |

As indicated in table 2 above, the values of indices $f_1$ and $f_2$ are below the allowed maximum values, both for cone glass and screen glass. Therefore, the test results confirm the admissibility of the use of the tested waste CRT glass as a material for producing safe cladding or facade glass tiles.

In Examples 1-15 below, a clay having the oxide composition presented in table 3 below was used as a mineral binder having the illite content within the range of 22-38% by weight.

Table 3: composition of the clay used as a mineral binder in Examples 1-15

| Chemical analysis | | |
|---|---|---|
| $SiO_2$ | wt% | 54-56 |
| $Al_2O_3$ | wt% | 37-39 |
| $TiO_2$ | wt% | $\leq 1.0$ |
| $Fe_2O_3$ | wt% | 2.2 - 2.7 |
| CaO | wt% | $\leq 0.4$ |
| MgO | wt% | $\leq 0.6$ |
| $Na_2O+K_2O$ | wt% | 1.5 - 2.1 |
| Mineral composition | | |
| Kaolinite | wt% | > 72 |
| Illite | wt% | $\leq 23.0$ |
| Quartz | wt% | $\leq 3.0$ |

In the Examples, wherein magnesium chloride was used as an anti-sedimentation agent, the compound was used in its hexahydrate form, but the weight content is expressed as calculated for anhydrous $MgCl_2$.

Example 1

95 parts by weight of waste cathode ray tube glass with an addition of 5 parts by weight of clay and 0.3 parts by weight of magnesium chloride ($MgCl_2$) and 60 parts by weight of water are ground to obtain particle size distribution defined by the parameters D(v,0.9)= 24 $\mu$m and D(v,0.5) = 5.26 $\mu$m. Subsequently, 0.27 parts by weight of magnesium stearate and 0.13 parts by weight of poly(vinyl alcohol) in form of a 4% aqueous solution are added to the suspension.

The suspension is dried in a spray dryer producing granules having water content of 0.4%. Subsequently, the granules are moisturised to a water content of 5.4% and subjected to a dry pressing process.

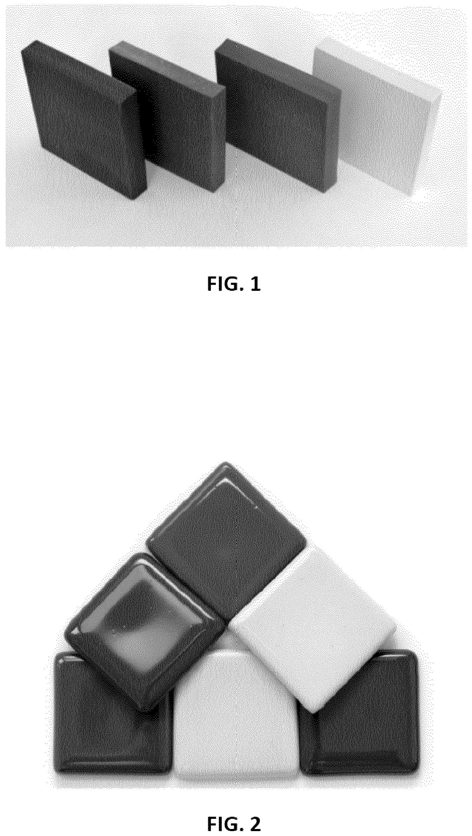

The pressed tiles are fired in an electric furnace for a period of 196 minutes, including keeping them for 13 minutes at a maximum temperature of 805±5°C. A matt tile having distinct sharp edges is produced. Tiles produced according to this Example are shown in fig. 1.

Example 2

95 parts by weight of waste cathode ray tube glass with an addition of 5 parts by weight of clay and 0.3 parts by weight of magnesium chloride ($MgCl_2$) and 60 parts by weight of water are ground to obtain particle size distribution defined by the parameters D(v,0.9) = 24 $\mu$m and D(v,0.5) = 5.26 $\mu$m. Subsequently, 0.27 parts by weight of magnesium stearate and 0.13 parts by weight of poly(vinyl alcohol) in form of a 4% aqueous solution are added to the suspension.

The suspension is dried in a spray dryer producing granules having water content of 0.4%. Subsequently, the granules are moisturised to a water content of 5.4% and subjected to a dry pressing process.

The pressed tiles are fired in a gas furnace for a period of 90 minutes, including keeping them for 13 minutes at a maximum temperature of 790±10°C. A matt tile having distinct sharp edges is produced.

Example 3

95 parts by weight of waste cathode ray tube glass with an addition of 5 parts by weight of clay and 0.3 parts by weight of magnesium chloride ($MgCl_2$) and 60 parts by weight of water are ground to obtain particle size distribution defined by the parameters D(v,0.9) = 24 $\mu$m and D(v,0.5) = 5.26 $\mu$m. Subsequently, 0.27 parts by weight of magnesium stearate and 0.13 parts by weight of poly(vinyl alcohol) in form of a 4% aqueous solution are added to the suspension.
The suspension is dried in a spray dryer producing granules having water content of 0.4%. Subsequently, the granules are moisturised to a water content of 5.4% and subjected to a dry pressing process.
The pressed tiles are fired in an electric furnace for a period of 196 minutes, including keeping them for 13 minutes at a maximum temperature of 900°C. A tile having a glossy surface and rounded edges is produced. Tiles produced according to this Example are shown in fig. 2.

Example 4

95 parts by weight of waste cathode ray tube glass with an addition of 5 parts by weight of clay and 0.3 parts by weight of magnesium chloride ($MgCl_2$) and 80 parts by weight of water are ground to obtain particle size distribution defined by the parameters D(v,0.9) = 31.11 $\mu$m and D(v,0.5) = 7.55 $\mu$m. Subsequently, 0.27 parts by weight of magnesium stearate and 0.15 parts by weight of poly(vinyl acetate) in form of a 4% aqueous solution are added to the suspension.
The suspension is dried in a spray dryer producing granules having water content of 2.4%. Subsequently, the granules are moisturised to a water content of 5.4% and subjected to a dry pressing process.
The pressed tiles are fired in an electric furnace for a period of 196 minutes, including keeping them for 13 minutes at a maximum temperature of 805±5°C. A matt tile having distinct sharp edges is produced.

Example 5

97 parts by weight of waste cathode ray tube glass with an addition of 3 parts by weight of clay and 0.5 parts by weight of adipic acid and 60 parts by weight of water are ground to obtain particle size distribution defined by the parameters D(v,0.9) = 28.52 $\mu$m and D(v,0.5) = 8.05 $\mu$m. Subsequently, 0.27 parts by weight of magnesium stearate and 0.15 parts by weight of methyl cellulose in form of a 4% aqueous solution are added to the suspension .
The suspension is dried in a spray dryer producing granules having water content of 0.8%. Subsequently, the granules are moisturised to a water content of 6.0% and subjected to a dry pressing process.
The pressed tiles are fired in an electric furnace for a period of 196 minutes, including keeping them for 13 minutes at a maximum temperature of 805±5°C. A matt tile having distinct sharp edges is produced.

Example 6

97 parts by weight of waste cathode ray tube glass with an addition of 3 parts by weight of clay and 0.5 parts by weight of adipic acid and 60 parts by weight of water are ground to obtain particle size distribution defined by the parameters D(v,0.9) = 28.52 $\mu$m and D(v,0.5) = 8.05 $\mu$m. Subsequently, 0.27 parts by weight of magnesium stearate and 0.15 parts by weight of methyl cellulose in a 4% aqueous solution are added to the suspension.
The suspension is dried in a spray dryer producing granules having water content of 0.8%. Subsequently, the granules are moisturised to a water content of 6.0 % and subjected to a dry pressing process.
The pressed tiles are fired in an electric furnace for a period of 196 minutes, including keeping them for 13 minutes in a maximum temperature of 900°C.
A tile having a glossy surface and rounded edges is produced.

Example 7

96 parts by weight of waste cathode ray tube glass with an addition of 4 parts by weight of clay and 0.4 parts by weight of adipic acid and 60 parts by weight of water are ground to obtain particle size distribution defined by the parameters D(v,0.9) = 28.52 $\mu$m and D(v,0.5) = 8.05 $\mu$m. Subsequently, 0.27 parts by weight of magnesium stearate and 0.15 parts by weight of methyl cellulose in form of a 4% aqueous solution are added to the suspension.
The suspension is dried in a spray dryer producing granules having water content of 0.6%. Subsequently, the granules are moisturised to a water content of 5.8% and subjected to a dry pressing process.
The pressed tiles are fired in an electric furnace for a period of 196 minutes, including keeping them for 13 minutes at a maximum temperature of 805±5°C. A matt tile having distinct sharp edges is produced.

### Example 8

96 parts by weight of waste cathode ray tube glass with an addition of 4 parts by weight of clay and 0.4 parts by weight of adipic acid and 60 parts by weight of water are ground to obtain particle size distribution defined by the parameters D(v,0.9) = 28.52 $\mu$m and D(v,0.5) = 8.05 $\mu$m. Subsequently, 0.27 parts by weight of magnesium stearate and 0.15 parts by weight of methyl cellulose in form of a 4% aqueous solution are added to the suspension.
The suspension is dried in a spray dryer producing granules having water content of 0.6%. Subsequently, the granules are moisturised to a water content of 5.8% and subjected to a dry pressing process.
The pressed tiles are fired in an electric furnace for a period of 196 minutes, including keeping them for 13 minutes at a maximum temperature of 900°C. A tile having a glossy surface and rounded edges is produced.

### Example 9

95 parts by weight of waste cathode ray tube glass with an addition of 5 parts by weight of clay and 0.25 parts by weight of adipic acid and 60 parts by weight of water are ground to obtain particle size distribution defined by the parameters D(v,0.9) = 27.3 $\mu$m and D(v,0.5) = 8.06 $\mu$m. Subsequently, 0.27 parts by weight of magnesium stearate and 0.15 parts by weight of methyl cellulose in form of a 4% aqueous solution are added to the suspension.
The suspension is dried in a spray dryer producing granules having water content of 0.5%. Subsequently, the granules are moisturised to a water content of 5.8% and subjected to a dry pressing process. The pressed tiles are fired in an electric furnace for a period of 196 minutes, including keeping them for 13 minutes at a maximum temperature of 805±5°C. A matt tile having distinct sharp edges is produced.

### Example 10

96 parts by weight of waste cathode ray tube glass with an addition of 4 parts by weight of clay and 0.4 parts by weight of adipic acid and 60 parts by weight of water are ground to obtain particle size distribution defined by the parameters D(v,0.9) = 24 $\mu$m and D(v,0.5) = 5.67 $\mu$m. Subsequently, 0.27 parts by weight of magnesium stearate and 0.20 parts by weight of methyl cellulose in form of a 4% aqueous solution are added to the suspension .
The suspension is dried in a spray dryer producing granules having water content of 0.5%. Subsequently, the granules are moisturised to a water content of 5.5% and subjected to a dry pressing process. The pressed tiles are fired in a gas furnace for a period of 90 minutes, including keeping them for 13 minutes at a maximum temperature of 800±10°C. A matt tile having distinct sharp edges is produced.

### Example 11

96 parts by weight of waste cathode ray tube glass with an addition of 4 parts by weight of clay and 0.2 parts by weight of adipic acid and 60 parts by weight of water are ground to obtain particle size distribution defined by the parameters D(v,0.9) = 24$\mu$m and D(v,0.5) = 5.67 $\mu$m. Subsequently, 0.27 parts by weight of magnesium stearate and 0.20 parts by weight of methyl cellulose in form of a 4% aqueous solution are added to the suspension.
The suspension is dried in a spray dryer producing granules having water content of 0.5%. Subsequently, the granules are moisturised to a water content of 5.4% and subjected to a dry pressing process. The pressed tiles are fired in an electric furnace for a period of 196 minutes, including keeping them for 13 minutes at a maximum temperature of 805±5°C. A matt tile having distinct sharp edges is produced.

### Example 12

96 parts by weight of waste cathode ray tube glass with an addition of 4 parts by weight of clay and 0.2 parts by weight of adipic acid and 60 parts by weight of water are ground to obtain particle size distribution defined by the parameters D(v,0.9) = 28 $\mu$m and D(v,0.5) = 7.97 $\mu$m. Subsequently, 0.27 parts by weight of magnesium stearate and 0.20 parts by weight of methyl cellulose in form of a 4% aqueous solution are added to the suspension.
The suspension is dried in a spray dryer producing granules having water content of 0.5%. Subsequently, the granules are moisturised to a water content of 5.4% and subjected to a dry pressing process. The pressed tiles are fired in an electric furnace for a period of 196 minutes, including keeping them for 13 minutes at a maximum temperature of 900°C. A tile having a glossy surface and rounded edges is produced.

### Example 13

96 parts by weight of waste cathode ray tube glass with an addition of 4 parts by weight of clay and 0.2 parts by weight of adipic acid and 60 parts by weight of water are ground to obtain particle size distribution defined by the parameters D(v,0.9) = 28 $\mu$m and D(v,0.5) = 7.97 $\mu$m. Subsequently, 0.27 parts by weight of magnesium stearate, 0.20 parts by weight of methyl cellulose in form of a 4%-aqueous solution and 1.5 parts by weight with respect to the basic matter of any ceramic pigment of the spinel group or having zirconium silicate structure is added to the suspension.

The suspension is dried in a spray dryer producing granules having water content of 0.5%. Subsequently, the granules are moisturised to a water content of 5.4% and subjected to a dry pressing process. The pressed tiles are fired in an electric furnace for a period of 196 minutes, including keeping them for 13 minutes at a maximum temperature of 900°C. A coloured tile having a glossy surface and rounded edges is produced. Tiles produced according to this Example are shown in fig. 2.

Example 14

96 parts by weight of waste cathode ray tube glass with an addition of 4 parts by weight of clay and 0.2 parts by weight of adipic acid and 60 parts by weight of water are ground to obtain particle size distribution defined by the parameters D(v,0.9) = 28 $\mu$m and D(v,0.5) = 7.97 $\mu$m. Subsequently, 0.27 parts by weight of magnesium stearate, 0.20 parts by weight of methyl cellulose in form of a 4%-aqueous solution and 1.5 parts by weight with respect to the basic matter of any ceramic pigment of the spinel group or having zirconium silicate structure is added to the suspension.

The suspension is dried in a spray dryer producing granules having water content of 0.5%. Subsequently, the granules are moisturised to a water content of 5.4% and subjected to a dry pressing process. The pressed tiles are fired in an electric furnace for a period of 196 minutes, including keeping them for 13 minutes at a maximum temperature of 805±5°C. A coloured, matt tile having distinct sharp edges is produced. Tiles produced according to this Example are shown in fig. 1.

Example 15

95 parts by weight of waste cathode ray tube glass with an addition of 5 parts by weight of clay and 0.25 parts by weight of adipic acid and 60 parts by weight of water are ground to obtain particle size distribution defined by the parameters D(v,0.9) = 27.3$\mu$m and D(v,0.5) = 8.06 $\mu$m. Subsequently, 0.27 parts by weight of magnesium stearate are added to the suspension. The suspension is dried in a spray dryer producing granules having water content of 0.3%. Subsequently, the granules are moisturised to a water content of 5.6% and subjected to a dry pressing process. The pressed tiles are fired in an electric furnace for a period of 196 minutes, including keeping them for 13 minutes at a maximum temperature of 805±5°C. A matt tile having distinct sharp edges is produced.

Examination of physicochemical parameters of the tiles according to the invention

The glass tiles according to the invention have been examined according to quality standard PN-EN 14411 [Ceramic tiles - Definitions, classification, properties, compliance assessment and labelling], because there are no corresponding standards for glass tiles. Physicochemical parameters of glass tiles produced on a laboratory scale in the Examples 1-15 above are presented collectively in table 4 below.

Table 4: collective results of the measurements of the physicochemical parameters of glass tiles of the Examples 1-15

| No. | Parameter | Resulting average value | Standard value | Standard |
|---|---|---|---|---|
| 1 | Average water absorption [%] | $\leq$ 0.5 | $\leq$ 0.5 | PN-EN ISO10545-3:1999 |
| 2 | Bending strength [N/mm$^2$] | $\geq$ 46.00 | Min. 35 | PN-EN ISO 10545-4:2012 |
| 3 | Breaking strength [ N] | >2081.00 | Min.1300 | |
| 4 | Chemical resistance of unglazed tiles | No visible changes | declaration | PN-EN ISO 10545-13:1999 + Ap1:2003 |
| 5 | Frost resistance determination | No fractured tiles - 100 cycles | No fractured tiles - 100 cycles | PN-EN ISO 10545-12:1999 |

The tests were performed for unglazed tiles, dry pressed, qualifying them to group B1 from Appendix G of the PN-EN 14411 standard.

As indicated by the values of physicochemical parameters determined according to the specified standards, the glass tiles according to the invention comply with the requirements of the PN-EN 14411 standard, and thus are suitable for being used both as cladding tiles for indoor applications and, owing to their sufficient frost resistance, as facade tiles, i.e. wall tiles for outdoor applications.

The tiles produced according to the invention are characterised by an amorphous phase content $\geq$ 98.43%.

Depending on the firing temperature, the profilometric parameters of the resulting tiles were following: Ra = 3.17 - 6.22 $\mu$m and Rz = 176.6 - 295.1 $\mu$m, whereby Ra denotes the arithmetic mean deviation of the profile from the middle line measured along the measurement or elementary segment, while Rz denotes the roughness height determined from the middle line along the measurement or elementary segment.

## Claims

1. A method for producing cladding or facade glass tiles from waste cathode ray tube glass (CRT), **characterised in that**

   at first, an anti-sedimentation agent is added to the basic matter comprising at least 95 % by weight of waste cathode ray tube glass and no more than 5 % by weight of a mineral binder having illite content within the range of 22-38 % by weight, mixed to obtain a homogeneous mixture and wet-ground to obtain a particle size distribution, wherein the particle substitute diameter D(v,0.9) determined by laser grain size analysis is contained within the range of 24-32 $\mu$m, and the particle substitute diameter D(v.0.5) is contained within the range of 5.26.-8.30 $\mu$m,
   subsequently, magnesium stearate in amount of 0.27-0.30 % by weight with respect to dry basic matter and a binding agent in the amount of 0-0.25 % by weight with respect to dry basic matter are added to the ground mixture, the binding agent being used in form of an aqueous solution,
   the resulting suspension is spray dried to obtain granules,
   the granules are placed in moulds and dry pressed to produce tiles,
   and then the tiles are fired at a temperature ranging from 780 to 900°C.

2. The method according to claim 1, **characterised in that** the glass used as waste cathode ray tube glass (CRT) comprises: 53-63 wt% $SiO_2$, 1-3.4 wt% $Al_2O_3$, 0.07-0.09 wt% $Fe_2O_3$, 0.05-0.50 wt% $TiO_2$, 6-7.8 wt% $Na_2O$, 7-8.3 wt% $K_2O$, 0.05-0.07 wt% $Li_2O$, 0.02-3.6 wt% CaO, 0.03-2.3 wt% MgO, 0.05-0.50 wt% ZnO, less than 0.001 wt% CuO, 0.2-21 wt% PbO, 1.1-8.6 wt% BaO, 0.5-9.0 wt% SrO, 0.95-1.9 wt% $ZrO_2$, less than 0.003 wt% NiO, less than 0.002 wt% CdO, less than 0.21 wt% $Sb_2O_3$ and less than 0.12 wt% $B_2O_3$.

3. The method according to claim 1 or 2, **characterised in that** the anti-sedimentation agent is used in the amount of 0.1 to 0.5 % by weight with respect to dry basic matter.

4. The method according to claim 3, **characterised in that** magnesium chloride or adipic acid is used as the anti-sedimentation agent.

5. The method according to one of claims 1-4, **characterised in that** poly(vinyl alcohol), methyl cellulose or poly(vinyl acetate) is used as the binding agent.

6. The method according to claim 5, **characterised in that** a 4 % aqueous solution of the binding agent is used.

7. The method according to one of claims 1-6, **characterised in that** at least one inorganic pigment is additionally added to the suspension.

8. The method according to claim 7, **characterised in that** the inorganic pigment is added in the amount of 1 to 3 % by weight with respect to dry total weight of the tile matter components.

9. A glass tile of waste cathode ray tube glass (CRT), **characterised in that** it comprises a basic matter and an anti-sedimentation agent, wherein the basic matter comprises at least 95 % by weight of waste cathode ray tube glass and no more than 5 % by weight of a mineral binder having illite content within a range of 22-38 % by weight, while amorphous phase constitutes over 98 % by weight of the tile material.

10. The glass tile according to claim 9, **characterised in that** as the waste cathode ray tube glass (CRT) it comprises the glass comprising: 53-63 wt% $SiO_2$, 1-3.4 wt% $Al_2O_3$, 0.07-0.09 wt% $Fe_2O_3$, 0.05-0.50 wt% $TiO_2$, 6-7.8 wt% $Na_2O$, 7-8.3 wt% $K_2O$, 0.05-0.07 wt% $Li_2O$, 0.02-3.6 wt% CaO, 0.03-2.3 wt% MgO, 0.05-0.50 wt% ZnO, less than 0.001 wt% CuO, 0.2-21 wt% PbO, 1.1-8.6 wt% BaO, 0.5-9.0 wt% SrO, 0.95-1.9 wt% $ZrO_2$, less than 0.003 wt% NiO, less than 0.002 wt% CdO, less than 0.21 wt% $Sb_2O_3$ and less than 0.12 wt% $B_2O_3$.

11. The glass tile according to claim 9 or 10, **characterised in that** it is an unglazed tile and shows the following parameters:

> average water absorption $\leq 0.5$ %, determined according to PN-EN IS010545-3:1999;
> average bending strength $\geq 46.00$ N/mm$^2$, determined according to PN-EN ISO 10545-4:2012;
> breaking strength > 2081.00 N, determined according to PN-EN ISO 10545-4:2012; and
> chemical resistance - no visible changes, determined according to PN-EN ISO 1054513:1999 + Ap1:2003.

12. The glass tile according to claim 11, **characterised in that** it is a cladding tile.

13. The glass tile according to claim 11, **characterised in that** it is a facade tile and shows frost resistance, i.e. no fractured tiles per 100 cycles, determined according to PN-EN ISO 10545-12:1999.

## Patentansprüche

1. Verfahren zur Herstellung von Verkleidungs- oder Fassadenglasfliesen aus Abfallkathodenstrahlröhrenglas (CRT), **dadurch gekennzeichnet, dass**
zuerst ein Antisedimentationsmittel zu dem Grundstoff zugegeben wird, der mindestens 95 Gew.% Abfallkathodenstrahlröhrenglas und nicht mehr als 5 Gew.% eines mineralischen Bindemittels mit einem Illit-Gehalt im Bereich von 22 bis 38 Gew.% umfasst, gemischt um eine homogene Mischung zu erhalten, und nassgemahlen wird um einer Teilchengrössenverteilung zu erhalten, bei der der Partikelsubstitutdurchmesser D (v, 0.9) durch Laserkorngrössenanalyse bestimmt im Bereich von 24-32 $\mu$m liegt, und der Partikelsubstitutdurchmesser D (v, 0.5) im Bereich von 5.26-8.30 $\mu$m liegt,
nachdem Magnesiumstearat in einer Menge von 0.27-0.30 Gew.% in Bezug auf das trockene Grundstoff und ein Bindemittel in der Menge von 0-0.25 Gew.% in Bezug auf das trockene Grundstoff zu der gemahlenen Mischung gegeben werden, wobei das Bindemittel in Form einer wässrigen Lösung verwendet wird,
die resultierende Suspension sprühgetrocknet wird, um ein Granulat zu erhalten, das Granulat in Formen gefüllt wird und zur Herstellung von Fliesen trockengepresst wird,
und dann die Fliesen bei einer Temperatur im Bereich von 780 bis 900°C gebrannt werden.

2. Das Verfahren nach Anspruch 1, **dadurch gekennzeichnet, dass** das als Abfallkathodenstrahlröhrenglas (CRT) verwendete Glas: 53-63 Gew.% $SiO_2$, 1-3.4 Gew.% $Al_2O_3$, 0.07-0.09 Gew.% $Fe_2O_3$, 0.05-0.50 Gew.% $TiO_2$, 6-7.8 Gew.% $Na_2O$, 7-8.3 Gew.% $K_2O$, 0.05-0.07 Gew.% $Li_2O$, 0.02-3.6 Gew.% CaO, 0.03-2.3 Gew.% MgO, 0.05-0.50 Gew.% ZnO, weniger als 0.001 Gew.% CuO, 0.2-21 Gew.% PbO, 1.1-8.6 Gew.% BaO, 0.5-9.0 Gew.% SrO, 0.95-1.9 Gew.% $ZrO_2$, weniger als 0.003 Gew.% NiO, weniger als 0.002 Gew.% CdO, weniger als 0.21 Gew.% $Sb_2O_3$ und weniger als 0.12 Gew.% $B_2O_3$ umfasst.

3. Das Verfahren nach Anspruch 1 oder 2, **dadurch gekennzeichnet, dass** das AntiSedimentationsmittel in einer Menge von 0.1 bis 0.5 Gew.% in Bezug auf das trockene Grundstoff verwendet wird.

4. Das Verfahren nach Anspruch 3, **dadurch gekennzeichnet, dass** als AntiSedimentationsmittel Magnesiumchlorid oder Adipinsäure verwendet wird.

5. Das Verfahren nach einem der Ansprüche 1 bis 4, **dadurch gekennzeichnet, dass** als Bindemittel Polyvinylalkohol, Methylcellulose oder Polyvinylacetat verwendet wird.

6. Das Verfahren nach Anspruch 5, **dadurch gekennzeichnet, dass** eine 4%-ige wässrige Lösung des Bindemittels verwendet wird.

7. Das Verfahren nach einem der Ansprüche 1-6, **dadurch gekennzeichnet, dass** der Suspension zusätzlich mindestens ein anorganisches Pigment zugesetzt wird.

8. Das Verfahren nach Anspruch 7, **dadurch gekennzeichnet, dass** das anorganische Pigment in einer Menge von 1 bis 3 Gew.% bezogen auf das Gesamtgewicht der Fliesenkomponenten zugegeben wird.

9. Glasfliese aus Abfallkathodenstrahlröhrenglas (CRT), **dadurch gekennzeichnet, dass** sie ein Grundstoff und ein Antisedimentationsmittel umfasst, wobei das Grundstoff mindestens 95 Gew.% Abfallkathodenstrahlröhrenglas und nicht mehr als 5 Gew.% eines mineralischen Bindemittels mit einem Illit-Gehalt im Bereich von 22 bis 38 Gew.% umfasst, während die amorphe Phase über 98 Gew.% des Fliesenmaterials ausmacht.

10. Die Glasfliese nach Anspruch 9, **dadurch gekennzeichnet, dass** sie als Abfallkathodenstrahlröhrenglas (CRT) das Glas, umfassend: 53-63 Gew.% $SiO_2$, 1-3.4 Gew.% $Al_2O_3$, 0.07-0.09 Gew.% $Fe_2O_3$ , 0.05-0.50 Gew.% $TiO_2$ , 6-7.8 Gew.% $Na_2O$, 7-8.3 Gew.% $K_2O$, 0.05-0.07 Gew.% $Li_2O$, 0.02-3.6 Gew.% CaO, 0.03-2.3 Gew.% MgO, 0.05-0.50 Gew.% ZnO, weniger als 0.001 Gew.% CuO, 0.2-21 Gew.% PbO, 1.1-8.6 Gew.% BaO, 0.5-9.0 Gew.% SrO, 0.95-1.9 Gew.% $ZrO_2$, weniger als 0.003 Gew.% NiO, weniger als 0.002 Gew.% CdO, weniger als 0.21 Gew.% $Sb_2O_3$ und weniger als 0.12 Gew.% $B_2O_3$ enthalten.

11. Die Glasfliese nach Anspruch 9 oder 10, **dadurch gekennzeichnet, dass** sie eine unglasierte Fliese ist und die folgenden Parameter aufweist:

durchschnittliche Wasserabsorption $\leq$ 0.5%, bestimmt nach PN-EN ISO10545-3:1999;
durchschnittliche Biegefestigkeit $\geq$ 46.00 N/mm, bestimmt nach PN-EN ISO 105454:2012;
Bruchfestigkeit > 2081.00 N, bestimmt nach PN-EN ISO 10545-4:2012; und
chemische Beständigkeit - keine sichtbaren Veränderungen, bestimmt gemäß PN-EN ISO 1054513: 1999 + Apl:2003.

12. Die Glasfliese nach Anspruch 11, **dadurch gekennzeichnet, dass** sie eine Verkleidungsfliese ist.

13. Die Glasfliese nach Anspruch 11, **dadurch gekennzeichnet, dass** sie eine Fassadenfliese ist und Frostbeständigkeit, d.h. keine gebrochenen Fliesen pro 100 Zyklen, bestimmt gemäß PN-EN ISO 1054512:1999, hat.

## Revendications

1. Une méthode de production de carreaux de verre de revêtement ou de façade à partir du verre de tube cathodique (CRT) usagé, **caractérisée en ce que**
tout d'abord, un agent anti-sédimentation est ajouté à la matière de base comprenant au moins 95% en poids de verre de tube cathodique usagé et pas plus de 5% en poids d'un liant minéral ayant une teneur en illite dans la plage de 22 à 38% en poids, mélangée pour obtenir un mélange homogène et broyé par voie humide pour obtenir une distribution granulométrique, dans laquelle le diamètre de substitut de particules D (v, 0.9) déterminé par analyse granulométrique au laser est contenu dans la plage de 24-32 $\mu$m, et le diamètre de substitut de particules D(v, 0.5) est contenu dans la plage de 5,26-8,30 $\mu$m,
ensuite le stéarate de magnésium en une quantité de 0.27 à 0.30% en poids par rapport à la matière sèche de base et un agent liant en une quantité de 0 à 0.25% en poids par rapport à la matière sèche de base sont ajoutés au mélange broyé, l'agent liant étant utilisé sous forme d'une solution aqueuse,
la suspension résultante est séchée par atomisation pour obtenir des granulés,
les granules sont placés dans des moules et pressés à sec pour produire des carreaux,
en ensuite, les carreaux sont cuits à une température comprise entre 780 et 900°C.

2. La méthode selon la revendication 1, **caractérisée en ce que** le verre utilisé comme verre de tube cathodique (CRT) usagé comprend: 53-63% en poids de $SiO_2$, 1-3.4% en poids de $Al_2O_3$, 0.07-0.09% en poids de $Fe_2O_3$, 0.05-0.50% en poids de $TiO_2$, 6-7.8% en poids de $Na_2O$, 7-8.3% en poids de $K_2O$, 0.05-0.07% en poids de $Li_2O$, 0.02-3.6% en poids de CaO, 0.03-2.3% en poids de MgO, 0.05-0.50% en poids de ZnO, moins que 0.001% en poids de CuO, 0.2-21% en poids de PbO, 1.1-8.6% en poids de BaO, 0,5-9,0% en poids de SrO, 0,95-1,9% en poids de $ZrO_2$, moins que 0.003% en poids de NiO, moins que 0.002% en poids de CdO, moins que 0.21% en poids de $Sb_2O_3$ et moins que 0.12% en poids de $B_2O_3$.

3. La méthode selon la revendication 1 ou 2, **caractérisée en ce que** l'agent anti-sédimentation est utilisé en une quantité de 0.1 à 0,5% en poids par rapport à la matière sèche de base.

**4.** La méthode selon la revendication 3, **caractérisée en ce que** le chlorure de magnésium ou l'acide adipique est utilisé comme agent anti-sédimentation.

**5.** La méthode selon l'une des revendications 1 à 4, **caractérisée en ce que** l'alcool polyvinylique, la méthylcellulose ou l'acétate de polyvinyle est utilisé comme agent liant.

**6.** La méthode selon la revendication 5, **caractérisée en ce qu'**une solution aqueuse à 4% de l'agent liant est utilisée.

**7.** La méthode selon l'une des revendications 1-6, **caractérisée en ce qu'**au moins un pigment inorganique est en outre ajouté à la suspension.

**8.** La méthode selon la revendication 7, **caractérisée en ce que** le pigment inorganique est ajouté en une quantité de 1 à 3% en poids par rapport au poids total sec des composants de la matière de carreaux.

**9.** Un carreau de verre à partir du verre de tube cathodique (CRT) usagé, **caractérisé en ce qu'**il comprend une matière de base et un agent anti-sédimentation. dans lequel la matière de base comprend au moins 95% en poids de verre de tube cathodique usagé et pas plus de 5% en poids d'un liant minéral ayant une teneur en illite dans une plage de 22 à 38% en poids, tandis que la phase amorphe constitue plus de 98% en poids du matériau de carreaux.

**10.** Le carreau de verre selon la revendication 9, **caractérisé en ce que** comme verre de tube cathodique (CRT) usagé il comprend le verre comprenant: 53-63% en poids de $SiO_2$, 1-3.4% en poids de $Al_2O_3$, 0.07-0.09% en poids de $Fe_2O_3$, 0.05-0.50% en poids de $TiO_2$, 6-7.8% en poids de $Na_2O$, 7-8..3% en poids de $K_2O$, 0.05-0.07% en poids de $Li_2O$, 0.02-3.6% en poids de CaO, 0.03-2.3% en poids de MgO, 0.05-0.50% en poids de ZnO, moins que 0.001 % en poids de CuO, 0.2-21 % en poids de PbO, 1.1-8.6% en poids de BaO, 0.5-9.0% en poids de SrO, 0.95-1.9% en poids de $ZrO_2$, moins que 0.003% en poids de NiO, moins que 0.002% en poids de CdO, moins que 0.21% en poids de $Sb_2O_3$ et moins que 0.12% en poids de $B_2O_3$.

**11.** Le carreau de verre selon la revendication 9 ou 10, **caractérisé en ce qu'**il s'agit d'un carreaux non émaillé et il montre les paramètres suivants:

absorption d'eau moyenne $\leq$ 0.5%, déterminée selon PN-EN IS010545-3:1999;
résistance à la flexion moyenne $\geq$ 46.00 N/mm$^2$, déterminée selon PN-EN ISO 105454:2012;
résistance à la rupture > 2081.00 N, déterminée selon PN-EN ISO 10545-4:2012; et
résistance chimique - pas de changements visibles, déterminée selon PN-EN ISO 1054513:1999 + Apl:2003.

**12.** Le carreau de verre selon la revendication 11, **caractérisé en ce qu'**il s'agit d'un carreau de revêtement.

**13.** Le carreau de verre selon la revendication 11, **caractérisé en ce qu'**il s'agit d'un carreau de façade et il montre résistance au gel, c.a.d. pas de carreaux fracturés par 100 cycles, déterminée selon PN-EN ISO 1054512:1999.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160122232 A1
- US 9321695 B
- US 20150299032 A
- CN 104876541
- CN 103395995
- WO 2011030366 A
- US 20140073830 A